# EUROPÄISCHE PATENTSCHRIFT

(11) **EP 1 717 380 B1**
(45) Veröffentlichungstag und Bekanntmachung des Hinweises auf die Patenterteilung: **18.03.2009**
(21) Anmeldenummer: 05405321.0
(22) Anmeldetag: 28.04.2005
(51) Int. Cl.: E03C 1/122, E03D 11/13, F16L 43/00

(54) **Anschlussvorrichtung zum Anschliessen eines Sanitärartikels**
Connection device for connecting a sanitary article
Pièce de raccordement pour brancher un article sanitaire

(43) Veröffentlichungstag der Anmeldung: 02.11.2006
(73) Patentinhaber: GEBERIT TECHNIK AG, 8645 Jona (CH)
(72) Erfinder: Pfister, Sascha, 8810 Horgen (CH); Grob, Stefan, 8645 Jona (CH)
(74) Vertreter: Groner, Manfred

(56) Entgegenhaltungen:
- DE-U- 29 903 954
- DE-U1- 20 218 825
- FR-A- 500 622
- FR-A- 1 083 256
- FR-A- 2 608 726

## Beschreibung

Die Erfindung betrifft eine Anschlussvorrichtung nach dem Oberbegriff des Anspruchs 1.

Eine Anschlussvorrichtung dieser Art ist durch die DE-U-299 03 954 bekannt geworden. Diese verbindet eine WC-Schüssel mit einer Entsorgungsleitung und benötigt zwei Schwenkschubgelenke sowie eine teleskopische Verbindung zu einem vertikal verlaufenden Fallrohr. Das eine Schwenkschubgelenk ist im aufsteigenden Bereich des Siphons angeordnet und muss mit einer speziellen verschiebbaren Dichtung abgedichtet werden.

Eine weitere Anschlussvorrichtung ist aus der EP 0 581 734 A des Anmelder bekannt geworden. Diese ist als zweiteiliges Leitungsmodul ausgebildet. Ein Teil des Leitungsmoduls ist ein Anschlussbogen, der an einem Ende teleskopisch ausziehbar oder über ein Drehgelenk mit einem Stutzen der Sammelleitung verbunden ist. Aufgrund der Anpassbarkeit des Leitungsmoduls an unterschiedliche Positionen des anzuschliessenden Sanitärartikels ist es möglich, das Sortiment an solchen Leitungsmodulen zu verkleinern und Schweissarbeiten zur Anpassung an unterschiedliche Anschlusshöhen zu vermeiden.

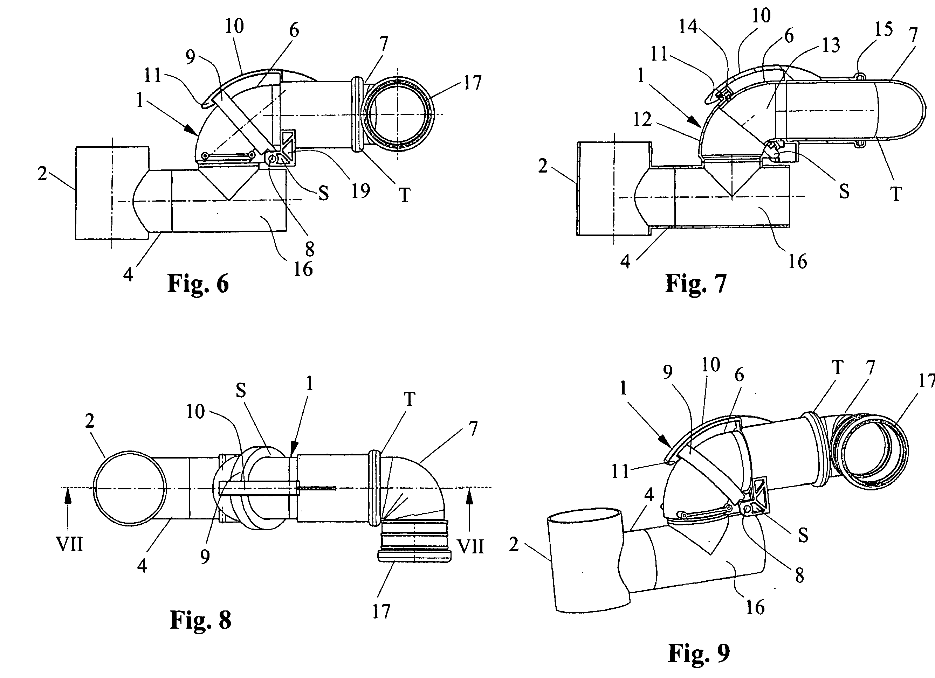

Durch die DE 202 18 825 U ist ein Abwasserbogen bekannt geworden, der einen flexiblen Rohrfaltenbalg und bei der Ausführung gemäss Figur 6 zudem eine teleskopische Rohrverbindung aufweist. Bei der Ausführung gemäss Figur 7 ist ein Kugelgelenk und eine teleskopische Rohrverbindung vorgesehen. Damit soll es möglich sein, bei einem Sanitärartikel bei der Montage und auch nachträglich dessen Position zu ändern.

Im Stand der Technik sind auch Klosettschüsseln bekannt geworden, die vom Benutzer in der Höhe verstellbar sind. Der Verstellbereich muss hier zweckmässigerweise vergleichsweise gross sein, damit alle gewünschten Positionen einstellbar sind.

Die FR-A-500 622 zeigt einen Wasserkran, mit dem der Wassertank von Dampflokomotiven mit Wasser nachgefüllt werden kann.

Der Erfindung liegt die Aufgabe zugrunde, eine Anschlussvorrichtung der genannten Art zu schaffen, die einen vergleichsweise grossen Verstellbereich in vertikaler Richtung ermöglicht und die dennoch einfach und kostengünstig herstellbar sowie funktionssicher ist. Die Anschlussvorrichtung soll sich insbesondere für WC-Anlagen eignen, bei denen der Benutzer die WC-Schüssel in der Höhe verstellen kann.

Die Aufgabe bei einer gattungsgemässen Anschlussvorrichtung gemäss Anspruch 1 gelöst.

Ein Schwenkschubgelenk ermöglicht einen vergleichsweise grossen Winkelbereich von beispielsweise 45°. Insbesondere ist es damit möglich, den Sanitärartikel tief und vergleichsweise in nahem Abstand zur Sammelleitung zu positionieren. Ein Schwenkschubgelenk ergibt zudem eine sehr sichere und stabile Verbindung. Die erfindungsgemässe Anschlussvorrichtung ist zudem strömungstechnisch vorteilhaft, insbesondere gegenüber einer solchen mit einem Faltenbalg und/oder einem Kugelgelenk.

Nach der Erfindung ist vorgesehen, dass die andere Verbindung eine teleskopisch verstellbare Rohrverbindung ist. Die Kombination des Schwenkschubgelenkes mit dieser teleskopisch verstellbaren Rohrverbindung ergibt eine besonders hohe Funktionssicherheit und einen grossen Verstellbereich in der Vertikalen und ist zudem strömungstechnisch besonders vorteilhaft. Auch hier ist ein modularer Aufbau möglich. Die Strömung im Bereich der Anschlussvorrichtung ist mit derjenigen in einem glatten Leitungsrohr vergleichbar.

Nach einer Weiterbildung der Erfindung ist vorgesehen, dass ein Verbindungsteil des Schwenkschubgelenkes einen Rohrabschnitt aufweist, der einen Abschnitt der Entsorgungsleitung bildet. Dieses Verbindungsteil kann mit einer Schweissverbindung in die Entsorgungsleitung bzw. Sammelleitung eingesetzt werden. Dies ergibt eine besonders hohe Stabilität und eine vergleichsweise einfache Montage.

Nach einer Weiterbildung der Erfindung ist vorgesehen, dass das Schwenkschubgelenk eine Ausziehsicherung aufweist. Diese ist vorzugsweise als Bügel ausgebildet, der an dem einen Verbindungsteil des Schwenkschubgelenkes befestigt ist und der mit einem freien Ende mit einem Kragen des zweiten Verbindungsteils des Schwenkschubgelenkes zusammenarbeitet.

Nach der Erfindung ist vorgesehen, dass die teleskopisch verstellbare Rohrverbindung einen Verbindungsteil aufweist, der einen um 90° abgebogenen Anschlussteil aufweist, welcher mit dem Sanitärartikel zu verbinden ist. Eine solche Anschlussvorrichtung eignet sich besonders zum Anschliessen einer WC-Schüssel.

Weitere vorteilhafte Merkmale ergeben sich aus den abhängigen Patentansprüchen, der nachfolgenden Beschreibung sowie der Zeichnung.

Ein Ausführungsbeispiel der Erfindung wird nachfolgend anhand der Zeichnung näher erläutert. Es zeigen:
- Figur 1: schematisch eine Ansicht einer erfindungsgemässen Anschlussvorrichtung, die an eine Sammelleitung angeschlossen ist, wobei ein Sanitärartikel in zwei unterschiedlichen Höhenpositionen gezeigt ist,
- Figur 2: eine weitere Ansicht der erfindungsgemässen Anschlussvorrichtung,
- Figur 3: ein Schnitt durch die erfindungsgemässe Anschlussvorrichtung entlang der Linie III-III der Figur 4,
- Figur 4: eine weitere Ansicht der erfindungsgemässen Anschlussvorrichtung,
- Figur 5: eine räumliche Ansicht der erfindungsgemässen Anschlussvorrichtung,
- Figur 6: eine weitere Ansicht der erfindungsgemässen Anschlussvorrichtung, wobei diese hier in der untersten Anschlussposition gezeigt ist,
- Figur 7: ein Schnitt durch die erfindungsgemässe Anschlussvorrichtung entlang der Linie VII-VII der Figur 8,
- Figur 8: eine weitere Ansicht der erfindungsgemässen Anschlussvorrichtung und
- Figur 9: eine räumliche Ansicht der erfindungsgemässen Anschlussvorrichtung.

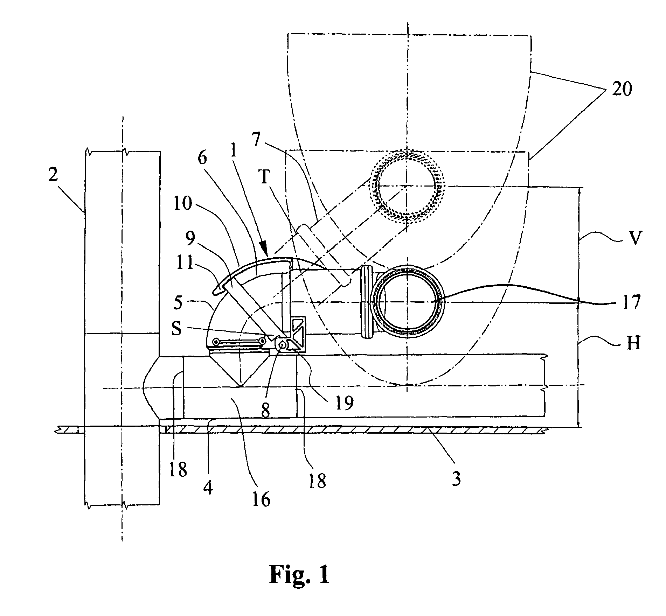

Die Figur 1 zeigt eine Anschlussvorrichtung 1, welche eine Sammelleitung 4 mit einem Sanitärartikel 20 verbindet. Der Sanitärartikel 20 ist insbesondere eine WC-Schüssel, welche vom Benutzer vertikal zu einem hier lediglich schematisch gezeichneten Gebäudeboden 3 verstellbar ist. Der mit Doppelpfeil gezeigte Verstellbereich V zwischen der untersten und der obersten Position beträgt beispielsweise 15-20 cm. In der untersten Position beträgt die ebenfalls mit einem Doppelpfeil eingezeichnete Höhe H über dem Gebäudeboden 3 beispielsweise 18 cm. Der Sanitärartikel 20 kann damit vergleichsweise tief eingestellt werden.

Die Sammelleitung 4 ist wie ersichtlich bezüglich des Gebäudebodens 3 etwas geneigt und mit einer Fallleitung 2 verbunden. Die Sammelleitung 4 und die Fallleitung 2 sind vorzugsweise durch Kunststoffrohre und Formstücke gebildet. An der Sammelleitung 4 können mehrere solche Anschlussvorrichtungen 1 angeordnet sein.

Die Anschlussvorrichtung 1 besitzt ein Schwenkschubgelenk S und im Abstand zu diesem eine teleskopische Rohrverbindung T. Das Schwenkschubgelenk S besitzt einen Bogenmuffenteil 5 als ersten Verbindungsteil und einen Anschlussmuffenteil 6 als zweiten Verbindungsteil. Der Bogenmuffenteil 5 besitzt einen geraden Muffenteil 16, der mit Schweissverbindungen 18 mit weiteren Rohrteilen der Sammelleitung 4 verbunden ist. Die Schweissstellen 18 können beispielsweise durch Spiegelschweissen hergestellt werden. Der Bogenmuffenteil 5 bildet somit mit dem geraden Muffenteil 16 einen Teil der Sammelleitung 4.

Die Gelenkachse 8 des Schwenkschubgelenkes S befindet sich am Bogenmuffenteil 5 unmittelbar über der Sammelleitung 4. An dieser Gelenkachse 8 greift ein Lagerteil 19 an, der mit dem Anschlussmuffenteil 6 verbunden ist. Der Anschlussmuffenteil 6 kann somit um die Gelenkachse 8 verschwenkt werden. Die Gelenkachse 8 befindet sich wie ersichtlich an der Unterseite des Aussenbogens 12 und nahe am Muffenteil 16. Wie die Figur 7 zeigt, besitzt der Bogenmuffenteil 5 einen Aussenbogen 12, der am freien Ende offen ist und in den ein Innenbogen 13 des Anschlussmuffenteils 6 eingeschoben ist. Die Bogen 12 und 13 bilden einen Abschnitt eines Kreises mit dem Mittelpunkt durch die Gelenkachse 8. Zur Abdichtung des Innenbogens 13 gegenüber dem Aussenbogen 12 weist der Aussenbogen 12 einen Kragen 9 auf, in den innenseitig eine Dichtung 14, beispielsweise eine Lippendichtung eingesetzt ist. Das Schwenkschubgelenk S ist damit in allen Schwenkpositionen dicht.

Damit der Innenbogen 13 nicht aus dem Aussenbogen 12 herausgezogen werden kann, ist als Ausziehsicherung am Anschlussmuffenteil 6 ein Sicherungsteil 10 befestigt, der einen bogenförmigen Bügel bildet und am freien Ende einen Haken 11 aufweist, welcher in der Stellung gemäss Figur 6 am Kragen 9 anliegt.

Die Teleskopverbindung T ist durch einen geraden Abschnitt des Anschlussmuffenteils 6 und durch einen Rohrteil 7 gebildet. Zur Abdichtung des Rohrteils 7 gegenüber dem Anschlussmuffenteil 6 ist in diesen gemäss Figur 7 eine Dichtung 15 eingesetzt. Der Rohrteil 7 greift in den Anschlussmuffenteil 6 ein und kann achsial bezüglich diesem verschoben werden, wobei in sämtlichen Stellungen die Dichtheit gewährleistet ist. Der Rohrteil 7 kann aus dem Anschlussmuffenteil 6 herausgezogen und wieder eingeschoben werden. Möglich wäre auch hier eine Auszugssicherung.

Der Rohrteil 7 besitzt eine Mündung 17, die einen Anschlussteil bildet, mit dem die Anschlussvorrichtung an einem hier nicht weiter gezeigten Stutzen des Sanitärartikels 20 aufschiebbar ist. Die Mündung 17 ist so auf dem Stutzen befestigt, dass der Rohrteil 7 um die Achse des Stutzens gedreht werden kann, wenn der Sanitärartikel 20 in seiner Höhe verstellt wird. Insgesamt sind somit drei Gelenke vorgesehen. Auch hier ist selbstverständlich eine geeignete hier nicht gezeigte Dichtung vorgesehen. Die Mündung 17 liegt in einer Ebene, die gemäss Figur 8 parallel zur Schubrichtung der teleskopischen Verbindung T verläuft. Der Rohrteil 7 kann beliebig um seine Längsachse gedreht werden. Er ist somit achsial verschiebbar und um seine Längsachse beliebig drehbar. Das Schwenkschubgelenk S ermöglicht hingegen lediglich eine Bewegung des Anschlussmuffenteils 6 in einer Ebene und in einem begrenzten Schwenkwinkel. Dieser Schwenkwinkel beträgt vorzugsweise wenigstens 45°. Der Schwenkwinkel kann auch grösser als 45° sein. Er ist so eingestellt, dass der gerade Bereich des Anschlussmuffenteils 6 gemäss Figur 1 in der untersten Position der Mündung 17 etwa parallel zur Sammelleitung 4 verläuft. Die Mündung 17 liegt damit nur wenig über der Sammelleitung 4, wie ebenfalls die Figur 1 zeigt.

Wird der Sanitärartikel 20 gemäss Figur 1 in der Höhe vertikal verstellt, so findet einerseits eine Schwenkbewegung um die Gelenksachse 8, eine Auszugsbewegung bzw. Einschubbewegung in achsialer Richtung des Rohrteils 7 und gleichzeitig eine Drehbewegung um die Längsachse des Stutzens statt. Dadurch ist es möglich, den Sanitärartikel 20 auch nach seiner Installation stufenlos in seiner Höhe zu verstellen.

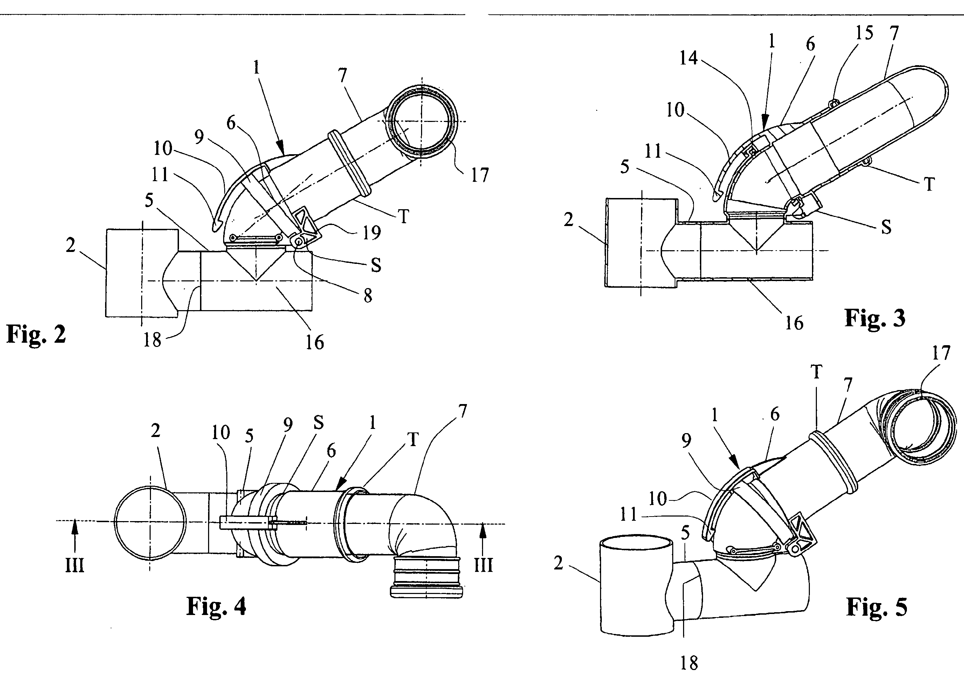

Die Figuren 6 bis 9 zeigen die Anschlussvorrichtung, wobei sich die Mündung 17 in der untersten Position befindet. Die Figuren 2 bis 5 zeigen die Anschlussvorrichtung 1 hingegen in der Position, in welcher sich die Mündung 17 in grösstem Abstand zur Sammelleitung 4 befindet. Der Rohrteil 7 ist hierbei maximal ausgezogen, während er in der Position gemäss den Figuren 6 bis 9 maximal eingeschoben ist.

### Bezugszeichenliste

- 1: Anschlussvorrichtung
- 2: Fallleitung
- 3: Gebäudeboden
- 4: Sammelleitung
- 5: Bogenmuffenteil
- 6: Anschlussmuffenteil
- 7: Rohrteil
- 8: Gelenkachse
- 9: Kragen
- 10: Sicherungsteil
- 11: Nase
- 12: Aussenbogen
- 13: Innenbogen
- 14: Dichtung
- 15: Dichtung
- 16: Muffenteil
- 17: Mündung
- 18: Schweissverbindung
- 19: Lagerteil
- 20: Sanitärartikel
- H: Höhe
- S: Schwenkschubgelenk
- T: Teleskopgelenk
- V: Verstellbereich

## Patentansprüche

1. Anschlussvorrichtung zum Anschliessen eines Sanitärartikels (20) an eine Entsorgungsleitung (4) und insbesondere eine Sammelleitung, mit einem ersten Ende, das eine Mündung (17) zum Anschliessen des Sanitärartikels (20) aufweist und mit einem zweiten Ende, das an eine Entsorgungsleitung (4) anschliessbar ist, mit wenigstens zwei im Abstand zueinander angeordneten flexiblen Verbindungen, die eine Positionsänderung des Sanitärartikels (20) ermöglichen, wobei die eine dieser flexiblen Verbindungen ein Schwenkschubgelenk (S) mit ineinandergreifenden Rohrbögen und die andere Verbindung eine teleskopisch verstellbare Rohrverbindung (T) ist, **dadurch gekennzeichnet, dass** die teleskopisch verstellbare Rohrverbindung (T) einen Rohrteil (7) aufweist, der einen um 90° abgebogenen Anschlussteil aufweist, der die genannte Mündung (17) bildet und mit dem Sanitärartikel (20) verbindbar ist und dass die teleskopisch verstellbare Rohrverbindung (T) zwischen dem Schwenkschubgelenk (S) und dem genannten ersten Ende angeordnet ist.

2. Anschlussvorrichtung nach Anspruch 1, **dadurch gekennzeichnet, dass** ein erster Verbindungsteil des Schwenkschubgelenks (S) einen vorzugsweise geraden Muffenteil (16) aufweist, der im montierten Zustand einen Abschnitt der Entsorgungsleitung (4) bildet.

3. Anschlussvorrichtung nach Anspruch 2, **dadurch gekennzeichnet, dass** der genannte erste Verbindungsteil ein Kunststoffformstück ist.

4. Anschlussvorrichtung nach Anspruch 2 oder 3, **dadurch gekennzeichnet, dass** der genannte erste Verbindungsteil einen Aussenbogen (12) aufweist, in den ein Innenbogen (13) eines zweiten Verbindungsteils eingreift.

5. Anschlussvorrichtung nach einem der Ansprüche 2 bis 4, **dadurch gekennzeichnet, dass** der genannte erste Verbindungsteil ein Bogenmuffenteil (5) mit einem geraden Muffenteil (16) und einem Aussenbogen (12) ist.

6. Anschlussvorrichtung nach einem der Ansprüche 1 bis 5, **dadurch gekennzeichnet, dass** das Schwenkschubgelenk (S) eine Ausziehsicherung aufweist.

7. Anschlussvorrichtung nach einem der Ansprüche 1 bis 6, **dadurch gekennzeichnet, dass** das Schwenkschubgelenk (S) einen Schwenkwinkel von wenigstens etwa 45° aufweist.

8. Anschlussvorrichtung nach einem der Ansprüche 1 bis 7, **dadurch gekennzeichnet, dass** das Schwenkschubgelenk (S) eine Schwenkposition aufweist, in welcher der Rohrteil (7) im Wesentlichen parallel zur Entsorgungsleitung (4) verläuft.

9. Anschlussvorrichtung nach einem der Ansprüche 1 bis 8, **dadurch gekennzeichnet, dass** das Schwenkschubgelenk (S) eine Schwenkachse (8) aufweist, die sich an der Unterseite des Aussenbogens (12) befindet.

## Claims

1. Connection device for connecting a sanitary article (20) to a waste-disposal line (4) and, in particular, to a collecting line, having a first end, which has a mouth opening (17) for connection of the sanitary article (20), and having a second end, which can be connected to a waste-disposal line (4), and having at least two spaced-apart flexible connections which allow the sanitary article (20) to change in position, the one of these flexible connections being a pivoting and sliding joint (S) with interengaging pipe bends and the other connection being a telescopically adjustable pipe connection (T), **characterized in that** the telescopically adjustable pipe connection (T) has a pipe part (7) which has a connection part which is bent through 90°, forms the abovementioned mouth opening (17) and can be connected to the sanitary article (20), and **in that** the telescopically adjustable pipe connection (T) is arranged between the pivoting and sliding joint (S) and the abovementioned first end.

2. Connection device according to Claim 1, **characterized in that** a first connecting part of the pivoting and sliding joint (S) has a preferably rectilinear socket part (16) which, in the installed state, forms a portion of the waste-disposal line (4).

3. Connection device according to Claim 2, **characterized in that** the abovementioned first connecting part is a plastic moulding.

4. Connection device according to Claim 2 or 3, **characterized in that** the abovementioned first connecting part has an outer pipe bend (12), in which an inner pipe bend (13) of a second connecting part engages.

5. Connection device according to one of Clams 2 to 4, **characterized in that** the abovementioned first connecting part is a pipe-bend socket part (5) with a rectilinear socket part (16) and an outer pipe bend (12).

6. Connection device according to one of Claims 1 to 5, **characterized in that** the pivoting and sliding joint (S) has a pull-out-prevention means.

7. Connection device according to one of Claims 1 to 6, **characterized in that** the pivoting and sliding joint (S) has a pivoting angle of at least approximately 45°.

8. Connection device according to one of Claims 1 to 7, **characterized in that** the pivoting and sliding joint (S) has a pivoting position in which the pipe part (7) runs essentially parallel to the waste-disposal line (4).

9. Connection device according to one of Claims 1 to 8, **characterized in that** the pivoting and sliding joint (S) has a pivot pin (8) which is located on the underside of the outer pipe bend (12).

## Revendications

1. Dispositif de raccordement pour brancher un article sanitaire (20) à une conduite d'évacuation (4) et en particulier une conduite de collecte, comprenant une première extrémité qui présente une embouchure (17) pour le raccordement de l'article sanitaire (20) et une deuxième extrémité qui peut être raccordée à une conduite d'évacuation (4), avec au moins deux connexions flexibles disposées à distance l'une de l'autre, qui permettent de varier la position de l'article sanitaire (20), l'une de ces connexions flexibles étant une articulation à coulissement et à pivotement (S) avec des tubes coudés venant en prise l'un dans l'autre et l'autre connexion étant une connexion tubulaire (T) à réglage télescopique, **caractérisé en ce que** la connexion tubulaire (T) à réglage télescopique présente une partie tubulaire (7) qui présente une partie de raccordement coudée à 90°, qui forme ladite embouchure (17) et qui peut être connectée à l'article sanitaire (20), et **en ce que** la connexion tubulaire (T) à réglage télescopique est disposée entre l'articulation à coulissement et à pivotement (S) et ladite première extrémité.

2. Dispositif de raccordement selon la revendication 1, **caractérisé en ce qu'**une première partie de connexion de l'articulation à coulissement et à pivotement (S) présente une partie de manchon de préférence droite (16) qui forme dans l'état monté une portion de la conduite d'évacuation (4).

3. Dispositif de raccordement selon la revendication 2, **caractérisé en ce que** ladite première partie de connexion est une pièce moulée en plastique.

4. Dispositif de raccordement selon la revendication 2 ou 3, **caractérisé en ce que** ladite première partie de connexion présente un coude extérieur (12) dans lequel s'engage un coude interne (13) d'une deuxième partie de connexion.

5. Dispositif de raccordement selon l'une quelconque des revendications 2 à 4, **caractérisé en ce que** ladite première partie de connexion est une partie de manchon coudée (5) avec une partie de manchon droite (16) et un coude extérieur (12).

6. Dispositif de raccordement selon l'une quelconque des revendications 1 à 5, **caractérisé en ce que** l'articulation à coulissement et à pivotement (S) présente une protection anti-retrait.

7. Dispositif de raccordement selon l'une quelconque des revendications 1 à 6, **caractérisé en ce que** l'articulation à coulissement et à pivotement (S) présente un angle de pivotement d'au moins environ 45°.

8. Dispositif de raccordement selon l'une quelconque des revendications 1 à 7, **caractérisé en ce que** l'articulation à coulissement et à pivotement (S) présente une position de pivotement dans laquelle la partie tubulaire (7) s'étend essentiellement parallèlement à la conduite d'évacuation (4).

9. Dispositif de raccordement selon l'une quelconque des revendications 1 à 8, **caractérisé en ce que** l'articulation à coulissement et à pivotement (S) présente un axe de pivotement (8) qui se trouve sur le côté inférieur du coude extérieur (12).
